# EUROPÄISCHE PATENTSCHRIFT

(11) **EP 0 716 946 B1**
(45) Veröffentlichungstag und Bekanntmachung des Hinweises auf die Patenterteilung: **10.06.1998**
(21) Anmeldenummer: 95119584.1
(22) Anmeldetag: 12.12.1995
(51) Int. Cl.: B60J 7/22

(54) **Windabweiser für Schiebedächer an Kraftfahrzeugen**
Wind deflector for sliding roofs of motor vehicles
Déflecteur de vent pour toit coulissant de véhicule automobile

(30) Priorität: 15.12.1994 DE 4444630
(43) Veröffentlichungstag der Anmeldung: 19.06.1996
(73) Patentinhaber: Rockwell International GmbH, 60314 Frankfurt (DE)
(72) Erfinder: Hattass, Rainer, D-63584 Gründau (DE); Weidmann, Brigitte, D-60316 Frankfurt (DE)
(74) Vertreter: Oppermann, Ewald, Dipl.-Ing.

(56) Entgegenhaltungen:
- EP-A- 0 140 491
- EP-A- 0 196 684
- DE-B- 1 189 393

## Beschreibung

Die Erfindung bezieht sich auf einen Windabweiser für Schiebedächer an Kraftfahrzeugen mit einer Luftleitfläche entsprechend dem Oberbegriff des Patentanspruchs 1.

Bei einer derartigen bekannten Luftleitfläche für Kraftfahrzeuge mit Schiebedach (DE-PS 11 89 393) ist die Luftleitfläche in der Ruhestellung hochkant im vorderen Randspalt zwischen dem Schiebedeckel und dem vorderen Rahmenquerteil des Schiebedachrahmens untergebracht. Der elastische Streifen der bekannten Luftleitfläche weist in seiner zweckmäßigen Ausgestaltung ein nach oben verjüngtes Profil auf, wodurch eine von der Fahr- bzw. Strömungsgeschwindigkeit abhängige Abbiegedeformation des elastischen Streifens erzielt werden soll.

Wenn sich die bekannte Luftleitfläche in ihrer über die Dachfläche angehobenen Arbeitsstellung befindet, untergreift ein nach vorn gerichteter Flanschansatz der als U-Profil ausgebildeten starren Leiste, welches das untere Ende des elastischen Streifens zu seiner Befestigung aufnimmt, den Kopf eines als Randspaltabdichtung an dem nach unten umgebogenen Dachausschnittsrand befestigten Dichtungsstreifens. Dadurch soll die Aufwärtsbewegung der Luftleitfläche anschlagartig begrenzt und zugleich ein Lufteintritt vor und unterhalb der Luftleitfläche verhindert werden.

Diese bekannte Anordnung eines aufrechtstehenden Windabweisers hat sich bei Fahrzeugen mit in Fahrtrichtung nahezu horizontal verlaufender Dachoberfläche und relativ kleinen Dachöffnungen des Schiebedachs bewährt. Moderne Karosserien besitzen zunehmend eine keilförmig gestaltete Längskontur, bei welcher die Dachfläche ausgehend von der oberen Frontscheibenkante zur Heckscheibenoberkante hin ansteigt. Ist eine derartige Karosserie mit einem Schiebedach ausgerüstet, befindet sich die vordere Querkante der Dachöffnung auf einem niedrigeren Niveau als die hintere Querkante der Dachöffnung. Dieser Höhenunterschied vergrößert sich noch durch den Einsatz von zunehmend großflächiger gestalteten Schiebedächern, bei deren Dachöffnungen der Abstand zwischen der vorderen Dachausschnittskante und der hinteren Dachausschnittskante bedeutend größer ist. Daher muß bei zurückgeschobenem Schiebedeckel der ausgestellte Windabweiser die Luftströmung über die höherliegende hintere Dachausschnittskante hinwegleiten können. Dazu muß aber die Oberkante der Luftleitfläche höher über den vorderen Dachausschnittsrand überstehen, was eine Verlängerung des Querschnitts der Luftleitfläche erforderlich macht.

Nun ist aber die Bauhöhe der Schiebedacheinheiten zur Erzielung eines größeren Kopffreiraums für die Insassen eines Kraftfahrzeugs immer geringer geworden, so daß der Abstand zwischen dem Wasserrinnenboden des vorderen Rahmenquerteils und einem auf den Rand des Schiebedeckels, beispielsweise eines Glasdeckels, aufgesteckten Randspaltabdichtungsprofil nicht mehr ausreicht, eine hochkant angeordnete Luftleitfläche unterzubringen. Es tritt noch hinzu, daß der nutzbare Abstand zwischen Wasserrinnenboden und Randspaltabdichtungsprofil bei einem Schiebehebedach infolge des Eintauchens der Deckelvorderkante in den vorderen Dachausschnittsbereich beim Ausstellen der Deckelhinterkante noch weiter verkleinert wird.

Der Erfindung liegt die Aufgabe zugrunde, bei einem Windabweiser der eingangs angegebenen Gattung die Luftleitfläche so auszubilden, daß sie auch bei nach hinten ansteigenden Fahrzeugdächern mit großem Dachausschnitt in ihrer Arbeitsstellung noch ausreichend weit über den vorderen Dachausschnittsrand nach oben übersteht, andererseits aber in ihrer Ruhestellung dennoch in einem Aufnahmeraum von geringer Höhe untergebracht werden kann.

Die gestellte Aufgabe wird durch die im Kennzeichnungsteil des Patentanspruchs 1 angegebenen Merkmale gelöst. Vorteilhafte Ausund Weiterbildungen der Erfindung sind in den Unteransprüchen angegeben und nachfolgend ebenfalls erläutert.

Bei dem erfindungsgemäßen Windabweiser wird dem elastischen Streifen durch sein sich nach unten verjüngendes Profil und seine Befestigung an der starren Leiste in der Nähe seines verdickten oberen Endes in seinem unteren Bereich eine erhebliche elastische Verformbarkeit vermittelt. Hierdurch und durch die nach vorn abbiegbare Ausbildung seines unteren Endes wird der elastische Streifen bei Auftreffen auf das vordere Rahmenquerteil beim Schließen des Schiebedachs im Sinne einer Verringerung des von ihm eingenommenen Raums elastisch verformt, gewissermassen partiell aufgerollt. Die Luftleitfläche kann daher auch bei flachbauenden Schiebedachkonstruktionen eingesetzt werden und dennoch bei geöffnetem Schiebedach eine so große wirksame gestreckte Länge aufweisen, daß die Luftströmung auch bei modernen Kraftfahrzeugkarosserien sicher über die hintere Dachausschnittskante hinweggeleitet wird.

Das untere Ende des elastischen Streifens ist zur Bildung einer wegbegrenzenden Anlage- und Abdichtlippe, die in der Arbeitsstellung durch die die Luftleitfläche beaufschlagende Federkraft an eine Anschlagfläche am vorderen Dachöffnungsrand angedrückt ist, vorteilhaft entsprechend Anspruch 2 ausgebildet. Gemäß Anspruch 3 ist hierbei die Anbringung einer zusätzlichen Anschlagfläche am vorderen Dachöffnungsrand entbehrlich.

Die in Anspruch 4 angegebene Ausbildung des unteren Endes des elastischen Streifens begünstigt das elastische Abbiegen bzw. Aufrollen des elastischen Streifens, wenn dieser beim Schließen des Schiebedachs auf das vordere Rahmenquerteil, d.h. auf den etwa horizontalen Boden der Wasserrinne des Rahmenquerteils, mit der gemäß Anspruch 4 abgerundeten Kante auftrifft. Die abgerundete Kante erleichtert das Gleiten und das dabei erfolgende nach vorn gerichtete Abbiegen des elastischen Streifens auf bzw. an dem vorderen Rahmenquerteil des Schiebedachrahmens.

Der elastische Streifen läßt sich entsprechend Anspruch 5 durch Ablängen von einem fortlaufenden Profil kostengünstig herstellen. Die starre Leiste kann zweckmäßig wie im Anspruch 6 angegeben ausgebildet sein.

Für bestimmte Abwendungsfälle, beispielsweise bei größeren Profilbreiten der Luftleitfläche, kann es vorteilhaft sein, den elastischen Streifen gemäß Anspruch 7 durch eine elastisch biegbare Einlage zu verstärken, wobei vorzugsweise dünner Federstahl entsprechend Anspruch 1 zur Anwendung kommen kann. Hierdurch kann auch das hakenartig abgebogene untere Ende des elastischen Streifens entsprechend verstärkt sein, wodurch die Anlage- und Abdichtwirkung verbessert wird.

Für die Befestigung zunächst getrennt hergestellter elastischer Streifen und starrer Leisten aneinander eignen sich die in den Ansprüchen 9 und 10 angegebenen alternativen Ausführungsformen besonders.

Der elastische Streifen muß nicht die ganze Profilbreite der Luftleitfläche einnehmen, wie die im Anspruch 11 angegebene Ausführungsform verdeutlicht, bei welcher ein Teil der glattflächigen Außenfläche der Luftleitfläche von einer entsprechenden Aussenfläche der starren Leiste eingenommen wird. Hierbei kann entsprechend Anspruch 12 die Luftleitfläche dennoch zu beiden Seiten der starren Leiste aus elastischem Material bestehen.

Eine vorteilhafte Möglichkeit der Ausbildung der Luftleitfläche besteht gemäß Anspruch 13 darin, die Luftleitfläche durch Umspritzen der starren Leiste und ggf. der elastisch biegbaren Einlage mit dem gummielastischen Werkstoff des elastischen Streifens zu bilden.

Da die Luftleitfläche zur wirbelfreien Führung des Luftstroms im Fahrbetrieb nur in Fahrtrichtung vorn an ihrer Außenfläche glattflächig auszubilden ist, kann die starre Leiste aus der Innenfläche der Luftleitfläche zur Erhöhung ihrer Biegesteifigkeit vorstehen, wie das in Anspruch 14 angegeben ist.

Die Erfindung wird nachfolgend anhand der beigefügten Zeichnungen in verschiedenen Ausführungsformen näher beschrieben. Darin zeigt:
- Fig. 1: die abgebrochene Draufsicht auf den vorderen Bereich eines mit Schiebedach ausgerüsteten Fahrzeugdachs, mit in ihrer Ruhestellung dargestellter Luftleitfläche, aber ohne den zur Zeichnungsvereinfachung weggelassenen Schiebedeckel,
- Fig. 2: die Schnittansicht gemäß der Linie II-II in Fig. 1, jedoch mit eingezeichnetem geschlossenem Schiebedeckel,
- Fig. 3: eine der Fig. 2 ähnliche Schnittansicht bei zurückgeschobenem Schiebedeckel und in ihrer Arbeitsstellung befindlicher Luftleitfläche,
- Fig. 4: den Schnitt gemäß der Linie IV-IV in Fig. 1, jedoch mit eingezeichnetem geschlossenem Schiebedeckel,
- Fig. 5: einen der Fig. 4 ähnlichen Schnitt bei geöffnetem (nicht dargestelltem) Schiebedeckel und in ihrer Arbeitsstellung befindlicher Luftleitfläche,
- Fig. 6: einen der Fig. 4 ähnlichen Schnitt bei ausgehend von seiner Schließstellung nach oben ausgestelltem Schiebedeckel eines Schiebehebedachs,
- Fig. 7: einen Schnitt durch eine erste Ausführungsform der in ihrer gestreckten, nicht eingebauten Stellung dargestellten Luftleitfläche,
- Fig. 8: einen der Fig. 7 ähnlichen Schnitt durch eine zweite Ausführungsform der Luftleitfläche und
- Fig. 9: einen der Fig. 7 ähnlichen Schnitt durch eine dritte Ausführungsform der Luftleitfläche.

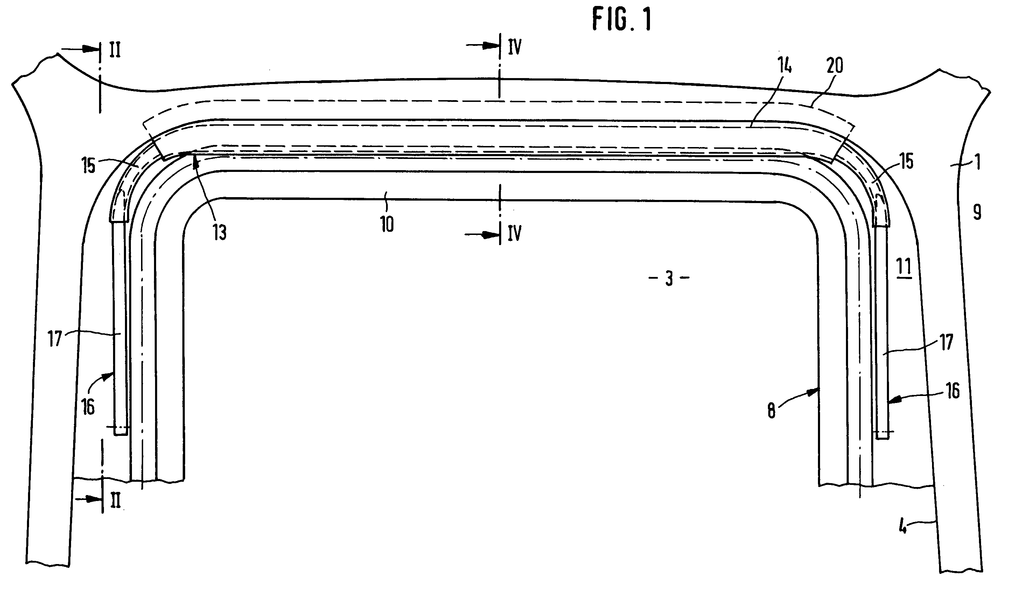

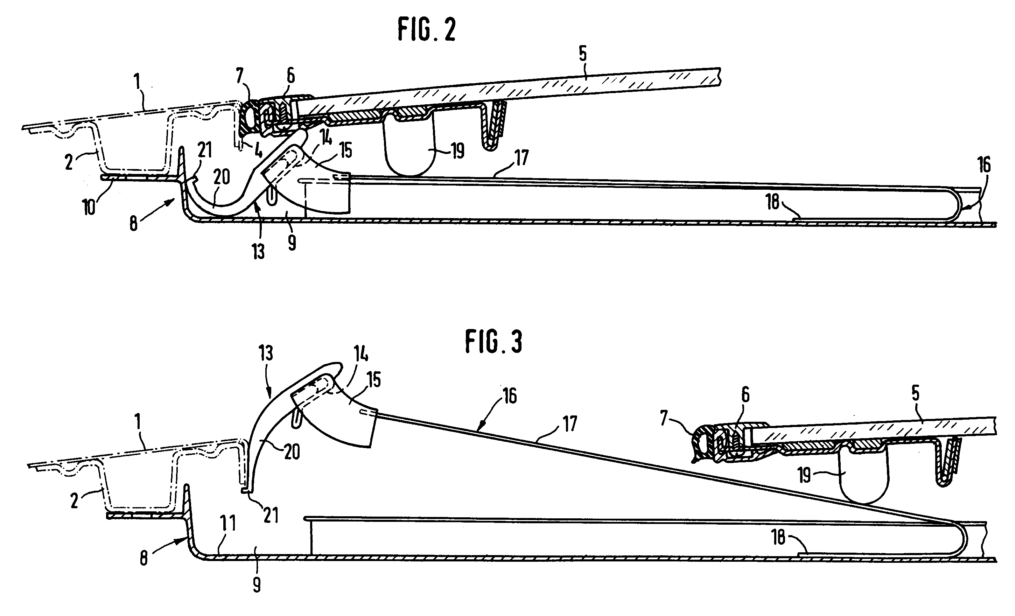

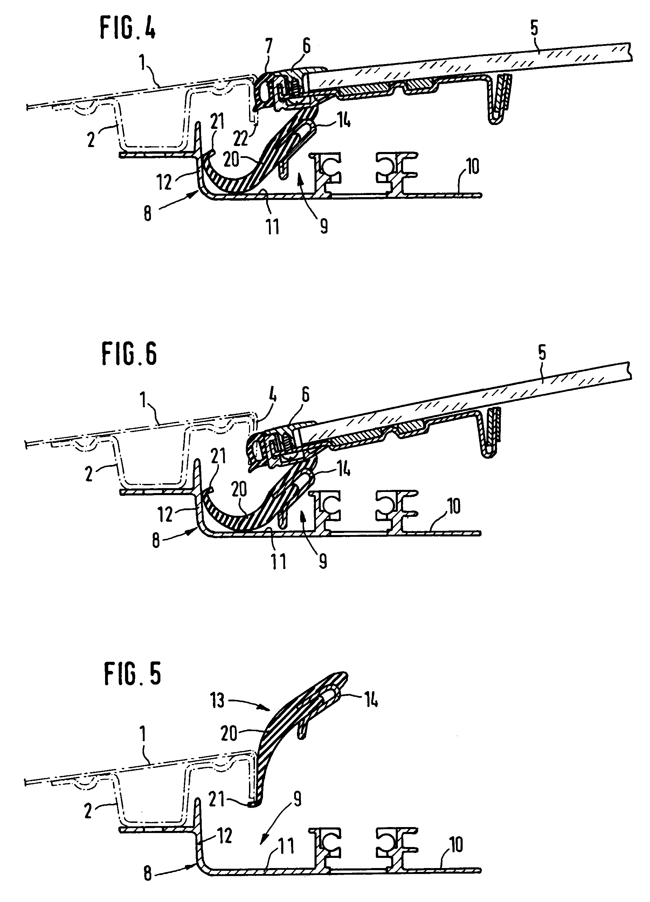

Aus Fig. 1 ist das Dachblech 1 einer Kraftfahrzeugkarosserie ersichtlich, die mit einem Schiebedach ausgestattet ist. Unter der Bezeichnung Schiebedach sollen auch Schiebehebedächer verstanden werden. In den Schnittdarstellungen ist das Dachblech 1 ebenso wie ein daran befestigter Verstärkungsrahmen 2 in strichpunktierten Linien dargestellt. In dem Dachblech 1 befindet sich eine Dachöffnung 3, die von einem Dachöffnungsrand 4 umgeben ist, der durch nach unten gerichtete Abkantung des Dachblechs 1 gebildet ist. Der Dachöffnung 3 ist ein Schiebedeckel 5 zugeordnet, der in der Schließstellung des Schiebedachs (Fig. 2 und 4) mit dem Dachblech 1 fluchtend die Dachöffnung 3 schließt und im gezeichneten Beispiel als Glasdeckel ausgebildet ist. Der Schiebedeckel 5 besitzt einen Einfaßrahmen 6, an welchem ein Randspaltabdichtungsprofil 7 befestigt ist, welches bei geschlossenem Schiebedeckel den zwischen dem Dachöffnungsrand 4 und dem Schiebedeckel 5 vorhandenen Randspalt abdichtend ausfüllt.

Unterhalb der Dachöffnung 3 befindet sich ein am Verstärkungsrahmen 2 befestigter Schiebedachrahmen 8, an welchem der Schiebedeckel 5 verschiebbar und in der Nähe seiner Vorderkante schwenkbar geführt ist. Außerdem sind am Schiebedachrahmen auch die den Schiebedeckel betätigenden Antriebselemente untergebracht. Da die Führungs- und Antriebselemente für den Schiebedeckel nicht Gegenstand vorliegender Erfindung sind und darüber hinaus zum Stande der Technik gehören, wird an dieser Stelle auf eine nähere Erläuterung verzichtet. Der Schiebedachrahmen 8 weist unterhalb des Randspalts zwischen dem Dachöffnungsrand 4 und dem Schiebedeckel 5 eine Wasserrinne 9 auf, welche eventuell über den Randspalt eindringendes Wasser auffängt und ableitet. Die Wasserrinne 9 besitzt wenigstens im Bereich des vorderen Rahmenquerteils 10 einen ebenen Wasserrinnenboden 11, der sowohl in Fahrtrichtung als auch in Querrichtung etwa horizontal angeordnet ist. Nach außen zu wird die Wasserrinne 9 von einer etwa senkrecht ausgerichteten Wand 12 begrenzt.

Wie aus den Fig. 1 bis 3 hervorgeht, ist im Bereich des vorderen Rahmenquerteils 10 eine nachstehend ausführlich beschriebene Luftleitfläche 13 vorgesehen, die sich quer zur Fahrtrichtung erstreckt und eine der Querwölbung des Dachblechs 1 angepaßte starre Leiste 14 aufweist, die sich mit Abstand zum vorderen Dachöffnungsrand 4 entlang der vorderen Kontur der Dachöffnung 3 erstreckt. Die beiden Enden der starren Leiste 14 sind nach hinten abgebogen oder an entsprechenden Bogenstücken befestigt. Die Abbiegungen bzw. Bogenstücke sind in den Fig. 1 bis 3 mit der Bezugszahl 15 bezeichnet. Die Abbiegungen oder Bogenstücke 15 sind jeweils starr an einer langgestreckten Bügelfeder 16 befestigt. Die Bügelfedern 16 besitzen jeweils einen längeren Schenkel 17 und einen kürzeren Schenkel 18. Während der längere Schenkel auf die beschriebene Weise mit der Luftleitfläche 13 verbunden ist, ist der kürzere Schenkel am Wasserrinnenboden 11 befestigt, so daß die Bügelfedern 16 zusammen mit der Luftleitfläche 13 eine etwa U-förmige Gestalt aufweisen, wie Fig. 1 verdeutlicht. Die Bügelfedern 16 sind bei geschlossenem Schiebedach mit Vorspannung angeordnet, wodurch bei zurückgezogenem Schiebedeckel 5 die längeren Schenkel 17 nach oben auffedern und die Luftleitfläche 13 des Windabweisers in die in Fig. 3 gezeigte Arbeitsstellung ausstellen. Beim Verschieben des Schiebedeckels 5 in seine in Fig. 2 gezeigte Schließstellung gleiten an beiden Seiten in der Nähe der Vorderkante des Schiebedeckels 5 am Schiebedeckel befestigte Gleitstücke 19 auf den nach oben aufgefederten längeren Schenkeln 17 der Bügelfedern 16, wodurch die Luftleitfläche 13 nach unten in Richtung ihrer Ruhestellung gemäß Fig. 2 verlagert wird, bis sie am vorderen Rahmenquerteil 10 unterhalb des Dachblechs 1 untergebracht ist.

Anstelle von Bügelfedern kann auch an jeder Seite ein starrer Hebel an der Abbiegung oder dem Bogenstück 15 starr befestigt sein, der an seinem anderen Ende schwenkbar mit dem Schiebedachrahmen 8 verbunden und durch eine Feder aufwärtsfedernd vorgespannt ist.

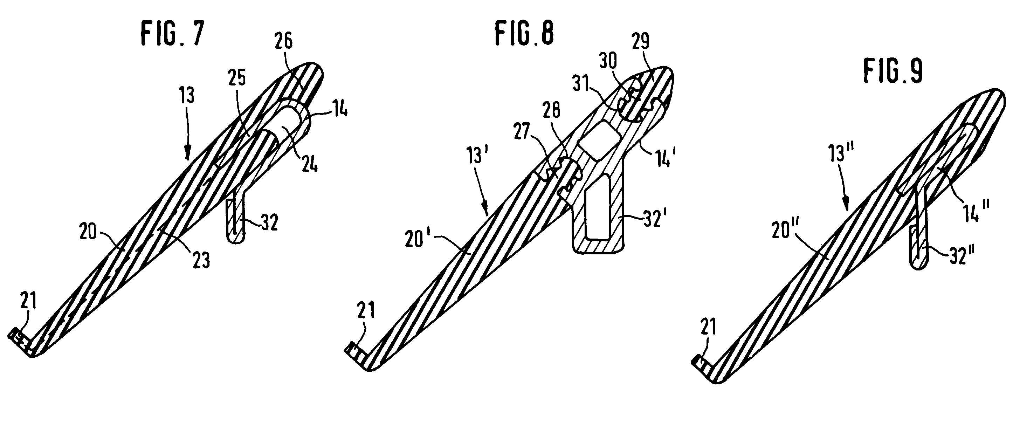

Zur näheren Erläuterung der Luftleitfläche 13 wird nunmehr auf die Fig. 4 bis 9 Bezug genommen. Wie daraus erkennbar ist, besteht die Luftleitfläche im wesentlichen aus einem elastischen Streifen 20 und der bereits erwähnten starren Leiste 14, an welcher der elastische Streifen auf noch näher zu erläuternde Weise befestigt ist. Der elastische Streifen weist ein sich nach unten verjüngendes Profil auf und ist in der Nähe seines im Profil verdickten oberen Endes an der starren Leiste 14 befestigt. Der elastische Streifen 20 kann durch Ablängen aus einem Profil gebildet sein, das aus einem geeigneten gummielastischen Werkstoff extrusionsgeformt ist. Die starre Leiste 14 kann als Blechbiegeteil (Fig. 7 und 9), als glasfaserverstärktes Kunststoffteil oder als stranggepreßtes Aluminiumteil (Fig. 8) ausgebildet sein.

Am unteren Ende ist der elastische Streifen 20 hakenartig und etwa rechtwinklig nach vorn zur Bildung einer Anlage- und Abdichtlippe 21 abgebogen. Beim Anheben der Luftleitfläche 13 trifft die Anlage- und Abdichtlippe wegbegrenzend auf eine Anschlagfläche 22, die im gezeigten Beispiel die untere Stirnfläche des zur Bildung des vorderen Dachöffnungsrandes nach unten abgekanteten Dachblechs 1 ist. In der Arbeitsstellung der Luftleitfläche 13 liegt die Anlage- und Abdichtlippe 21 der Anschlagfläche 22 unter Einwirkung der Federkraft der Bügelfedern 16 abgedichtet an, wie Fig. 5 veranschaulicht. Außerdem ist die Außenfläche des elastischen Streifens 20 aufgrund der elastischen Federkraft des elastischen Streifens dem benachbarten Dachöffnungsrand 4 dicht angedrückt. Im Fahrbetrieb kann daher keine Luft zwischen dem Dachöffnungsrand 4 und der Luftleitfläche 13 hindurchtreten.

Aufgrund seiner besonderen Ausbildung und seiner elastischen Werkstoffeigenschaften ist der elastische Streifen 20 zu einem besonderen Verformungsverhalten während des Schließvorgangs, d.h. bei seiner Verlagerung aus der Arbeitsstellung in die Ruhestellung, befähigt. Das gilt selbstverständlich auch umgekehrt für seine Verlagerung aus der Ruhestellung in die Arbeitsstellung.

Wird der öffnungsverschobene Schiebedeckel 5 in seine Schließstellung (Fig. 2) bewegt, so treffen die Gleitstücke 19 auf die Bügelfedern 16 auf und verlagern die Luftleitfläche 13 ausgehend von der Stellung gemäß der Fig. 3 und 5 nach unten. Die in Fahrtrichtung vorn liegende Außenfläche des elastischen Streifens 20 gleitet dabei mit elastischer Andrückung an der Fläche des Dachöffnungsrandes 4 nach unten. Dabei hebt die Anlage- und Abdichtlippe 21 von der Anschlagfläche 22 ab. Unterhalb der Anschlagfläche 22 beginnt sich bei fortgesetzter Bewegung der elastische Streifen 20 infolge seiner elastischen Rückstellkraft zu strecken und sich mit seinem unteren Ende nach vorn zu verlagern, bis das untere Ende des elastischen Streifens auf den Wasserrinnenboden 11 auftrifft. Bei fortgesetzter Bewegung wird jetzt der elastische Streifen durch den Wasserrinnenboden 11, auf dem er gleitet, nach vorn geführt. Dieser Gleit- und Führungsvorgang wird dadurch verbessert, daß am unteren Ende des elastischen Streifens 20 die Außenfläche der Anlage- und Abdichtlippe 21 abgerundet an die Innenfläche des elastischen Streifens angeschlossen ist. Bei weiterhin fortgesetzter Bewegung erreicht die Lippe 21 das vordere Ende des Wasserrinnenbodens und wird jetzt an der Ausrundung zwischen dem Wasserrinnenboden 11 und der Wand 12 entlanggeführt, bis die Lippe 21 die Wand 12 erreicht, an welcher sie in der Folge nach oben aufsteigt. Hierbei nimmt dann schließlich der elastische Streifen 20 seine für die Ruhestellung typische Einroll- oder Aufrollstellung ein, wie sie in den Fig. 2 und 4 gezeigt ist. Auf diese Weise läßt sich auch eine im Profil verhältnismäßig breite Luftleitfläche in einem Raum geringer Bauhöhe in der Ruhestellung unterbringen. Die Luftleitfläche 13 bleibt aber auch ausgehend von ihrer Ruhestellung gemäß Fig. 4 noch weiter im Sinne einer Zusammendrückung verformbar, wie in Fig. 6 dargestellt ist. Diese zusätzliche Verformbarkeit ist für Schiebehebedächer unumgänglich.

Das elastische Rückstellvermögen des elastischen Streifens 20 in die in Fig. 7 dargestellte Strecklage läßt sich noch verbessern, wenn der elastische Streifen durch eine elastisch biegbare Einlage 23 verstärkt ist, die in Fig. 7 als gestrichelte Linie angedeutet ist. Die Einlage kann aus dünnem Federstahl in Form eines Lochblechs gebildet sein, so daß die auf beiden Seiten der Einlage 23 befindlichen Materialabschnitte des elastischen Streifens durch die Öffnungen des Lochblechs hindurch miteinander verbunden sind. Diese für die Stabilität des elastischen Streifens 20 gewünschte Struktur wird bei Extrusionsformung des elastischen Streifens mit gleichzeitig zugeführter und daher eingebetteter Einlage 23 ohne weiteres erreicht. Wie aus Fig. 7 ebenfalls hervorgeht, kann die Einlage 23 am unteren Ende mit einer der Anlage- und Abdichtlippe 21 entsprechenden hakenartigen Abbiegung versehen sein, die sich in die Lippe hineinerstreckt. Auf diese Weise wird die hakenartige Struktur des unteren Endes des elastischen Streifens 20 stabilisiert, was für die Anschlag- und Abdichtfunktion der Lippe 21 von Vorteil ist.

Für die Befestigung des elastischen Streifens 20 an der starren Leiste stehen verschiedene Möglichkeiten zur Verfügung. Bei der in den Fig. 1 bis 7 dargestellten ersten Ausführungsform ist der elastische Streifen 20 an seinem verdichteten oberen Ende mit einer hinterschnittenen Aufnahmetasche 24 versehen. Diese öffnet sich zur Innenfläche des elastischen Streifens 20 hin mit einer Einstecköffnung für die starre Leiste 14. Die starre Leiste 14 ist zum Eingriff in die Aufnahmetasche 24 im Befestigungsbereich U-förmig ausgebildet und greift teilweise formschlüssig in die hinterschnittene Aufnahmetasche 24 ein, wobei insbesondere der innenliegende Schenkel 25 die formschlüssige Verklammerung und Befestigung besorgt. Das obere Ende 26 des elastischen Streifens 20 übergreift partiell die starre Leiste 14 von oben und hält diese sicher in ihrer eingesteckten Lage.

Bei der zweiten Ausführungsform gemäß Fig. 8 ist der elastische Streifen 20' an seinem verdickten oberen Ende mit einer durchgehenden Befestigungsrippe 27 versehen, die zur Befestigung des elastischen Streifens in eine Aufnahmenut 28 der starren Leiste 14' eingreift und darin durch miteinander eingreifende Rippen bzw. Vertiefungen formschlüssig gehalten ist. Während beim ersten Ausführungsbeispiel gemäß Fig. 7 die starre Leiste 14 ein Blechbiegeteil ist, ist die starre Leiste 14' im Falle der zweiten Ausführungsform gemäß Fig. 8 ein stranggepreßtes Aluminiumprofil mit Hohlkammern. Die starre Leiste 14 ist so ausgebildet, daß der elastische Streifen 20' mit seiner vorn befindlichen Außenfläche bündig an die starre Leiste 14' anschließt. Die starre Leiste bildet daher einen Teil der glattflächigen Außenfläche der Luftleitfläche 13'. Der obere Abschluß der Luftleitfläche 13' wird von einem zusätzlichen elastischen Profilstreifen 29 gebildet, der an der starren Leiste 14', dem elastischen Streifen 20' gegenüberliegend befestigt ist. Die Befestigung des Profilstreifens 29 erfolgt ähnlich der Befestigung des elastischen Streifens 20'. Zu diesem Zweck besitzt der Profilstreifen 29 eine Befestigungsrippe 30, die über Rippen und Vertiefungen verklammert in eine Aufnahmenut 31 der starren Leiste 14' eingreift. Die Befestigung des elastischen Streifens 20' an der starren Leiste 14' über den Eingriff der Befestigungsrippe 27 mit der Aufnahmenut 28 ist solcherart, daß auch beim Verbiegen des elastischen Streifens 20' während der Bewegungsphasen des Windabweisers der elastische Streifen 20' fest an der starren Leiste 14' gehalten ist.

Bei der in Fig. 9 dargestellten dritten Ausführungsform ist die starre Leiste 14'' wiederum ein Blechbiegeteil, das in diesem Fall durch Umspritzen mit dem gummielastischen Werkstoff des elastischen Streifens 20'' in der Luftleitfläche 13'' fest eingebettet ist.

Bei allen drei Ausführungsformen gemäß den Fig. 7 bis 9 steht die starre Leiste 14 bzw. 14' bzw. 14'' aus der Innenfläche der Luftleitfläche 13 bzw. 13' bzw. 13'' zur Erhöhung ihrer Biegesteifigkeit mit einem Profilflansch 32 bzw. 32' bzw. 32'' vor.

Die Luftleitfläche ist besonders einfach und rationell herzustellen, weil der elastische Streifen bei den Ausführungsformen gemäß den Fig. 7 und 8 abschnittsweise von einem Extrusionsprofil abgeschnitten werden kann. Bei der Ausführungsform gemäß Fig. 8 gilt das auch für die starre Leiste 14' und den oberen Profilstreifen 29.

Die erfindungsgemäße Luftleitfläche eines Windabweisers für Kraftfahrzeugschiebedächer besteht aus einem sich nach unten verjüngenden, d.h. stetig in der Dicke abnehmenden, elastischen Profilstreifen aus einem gummielastischen Material, der an einer der Querwölbung des Dachblechs angepaßten und aufwärts federnd am Schiebedachrahmen gelagerten starren Leiste befestigt ist. Der elastische Profilstreifen liegt in der Arbeitsstellung dem vorderen Dachöffnungsrand abdichtend an, wodurch eine ungestörte und damit weitgehend geräuschlose Luftstromführung auch bei nur wenig geöffnetem Schiebedeckel und sogar bei nicht vollständig ausgestelltem Windabweiser erreicht wird. Schräglage und Ausbildung des elastischen Profilstreifens erlauben beim Bewegen des Windabweisers in seine Ruhestellung eine Auf- oder Einrolldeformation des elastischen Profilstreifens praktisch innerhalb der Wasserrinne des Schiebedachrahmens, so daß der Ruhestellungs-Platzbedarf des Windabweisers, insbesondere in der Höhe, sehr gering ist.

## Patentansprüche

1. Windabweiser für Schiebedächer an Kraftfahrzeugen, mit einer Luftleitfläche (13, 13', 13''), die sich in Form eines Streifens (20, 20', 20'') aus weichem, elastischem Material, der ein verjüngtes Profil aufweist, quer zur Fahrtrichtung erstreckt und an einer der Querwölbung des Dachblechs (1) angepaßten starren Leiste (14, 14', 14'') befestigt ist, die aufwärts federnd am Schiebedachrahmen (8) gelagert ist, um die Luftleitfläche an dem vorderen Dachöffnungsrand (4) beim Öffnen des Schiebedachs mit ihrem für die Luftleitung wirksamen Teil selbsttätig über das Dachblech in die Arbeitsstellung anzuheben, und beim Schließen des Schiebedachs entgegen der Federwirkung in die Ruhestellung absenkbar ist, wobei die Luftleitfläche (13, 13' 13'') und die sie tragende Leiste (14, 14', 14'') in der Schließstellung des Schiebedachs am vorderen Rahmenquerteil (10) des Schiebedachrahmens (8) unterhalb des Dachblechs (1) untergebracht sind, **dadurch gekennzeichnet**, daß der elastische Streifen (20, 20', 20'') ein nach unten verjüngtes Profil aufweist und in der Nähe seines im Profil verdickten oberen Endes an der starren Leiste (14, 14', 14'') befestigt ist, daß die in Fahrtrichtung vorn befindliche Außenfläche der Luftleitfläche (13, 13', 13'') glattflächig ausgebildet ist, und daß das untere Ende des elastischen Streifens (20, 20' 20'') beim Schließen des Schiebedachs und Auftreffen auf das vordere Rahmenquerteil (10) des Schiebedachrahmens (8) im wesentlichen nach vorn elastisch abbiegbar ausgebildet ist.

2. Windabweiser nach Anspruch 1, **dadurch gekennzeichnet**, daß das untere Ende des elastischen Streifens (20, 20', 20'') hakenartig und etwa rechtwinklig nach vorn zur Bildung einer Anlage- und Abdichtlippe (21) abgebogen ist, die beim Anheben der Luftleitfläche (13, 13', 13'') wegbegrenzend auf eine Anschlagfläche (22) am vorderen Dachöffnungsrand (4) auftrifft und dieser abdichtend durch die auf die Luftleitfläche einwirkende Federkraft angedrückt ist.

3. Windabweiser nach Anspruch 2, **dadurch gekennzeichnet**, daß die Anschlagfläche (22) die untere Stirnfläche des zur Bildung des vorderen Dachöffnungsrandes (4) nach unten abgekanteten Dachblechs (1) ist.

4. Windabweiser nach einem der Ansprüche 1 bis 3, **dadurch gekennzeichnet**, daß am unteren Ende des elastischen Streifens (20, 20', 20'') die Außenfläche der Anlage- und Abdichtlippe (21) abgerundet an die Innenfläche des elastischen Streifens angeschlossen ist.

5. Windabweiser nach einem der Ansprüche 1 bis 4, **dadurch gekennzeichnet**, daß der elastische Streifen (20, 20') durch Ablängen aus einem Profil gebildet ist, das aus einem gummielastischen Werkstoff extrusionsgeformt ist.

6. Windabweiser nach einem der Ansprüche 1 bis 5, **dadurch gekennzeichnet**, daß die starre Leiste als Blechbiegeteil (14, 14''), als glasfaserverstärktes Kunststoffteil oder als stranggepreßtes Aluminiumteil (14') ausgebildet ist.

7. Windabweiser nach einem der Ansprüche 1 bis 6, **dadurch gekennzeichnet**, daß der elastische Streifen (20, 20', 20'') durch eine elastisch biegbare Einlage (23) verstärkt ist.

8. Windabweiser nach Anspruch 7, **dadurch gekennzeichnet**, daß die Einlage (23) aus dünnem, perforiertem Federstahl gebildet ist und sich am unteren Ende mit einer entsprechenden hakenartigen Abbiegung in die Anlage- und Abdichtlippe (21) hinein erstreckt.

9. Windabweiser nach einem der Ansprüche 1 bis 8, **dadurch gekennzeichnet**, daß der elastische Streifen (20) an seinem verdickten oberen Ende mit einer hinterschnittenen Aufnahmetasche (24) versehen ist, die sich zur Innenfläche des elastischen Streifens hin mit einer Einstecköffnung für die starre Leiste (14) öffnet, die zur Befestigung des elastischen Streifens mindestens teilweise formschlüssig in die hinterschnittene Aufnahmetasche (24) eingreift.

10. Windabweiser nach einem der Ansprüche 1 bis 8, **dadurch gekennzeichnet**, daß der elastische Streifen (20') an seinem verdickten oberen Ende mit einer durchgehenden Befestigungsrippe (27) versehen ist, die zur Befestigung des elastischen Streifens in eine Aufnahmenut (28) der starren Leiste (14') eingreift und darin formschlüssig gehalten ist.

11. Windabweiser nach einem der Ansprüche 1 bis 10, **dadurch gekennzeichnet**, daß der elastische Streifen (20') mit seiner vorn befindlichen Außenfläche bündig an die starre Leiste (14') anschließt, die einen Teil der glattflächigen Außenfläche der Luftleitfläche (13') bildet.

12. Windabweiser nach Anspruch 11, **dadurch gekennzeichnet**, daß der obere Abschluß der Luftleitfläche (13') von einem zusätzlichen elastischen Profilstreifen (29) gebildet ist, der an der starren Leiste (14') dem elastischen Streifen (20') gegenüberliegend befestigt ist.

13. Windabweiser nach den Ansprüchen 1 bis 8, d**adurch gekennzeichnet**, daß die Luftleitfläche (13'') durch Umspritzen der starren Leiste (14'') und ggf. der elastisch biegbaren Einlage (23) mit dem gummielastischen Werkstoff des elastischen Streifens (20'') gebildet ist.

14. Windabweiser nach einem der Ansprüche 1 bis 13, **dadurch gekennzeichnet**, daß die starre Leiste (14, 14', 14'') aus der Innenfläche der Luftleitfläche (13, 13', 13'') zur Erhöhung ihrer Biegesteifigkeit mit einem Profilflansch (32, 32', 32'') vorsteht.

## Claims

1. Wind deflector for sliding roofs of motor vehicles, comprising an air guide surface (13, 13', 13''), which extends transversely to the direction of travel of the vehicle in the form of a strip (20, 20', 20'') of soft elastic material which has a tapering profile, and is fixed to a rigid bar (14, 14', 14'') adapted to the transverse curvature of the roof plate (1), which bar is mounted upwardly sprung on a sliding roof frame (8), for the purpose of raising the air guide surface with its air guidance portion automatically above the roof plate (1) into a working position against a front roof opening rim (4) when the sliding roof is opened, and in closure of the sliding roof can be lowered against the spring action into a stowed position, wherein the air guide surface (13, 13', 13'') and the bar (14, 14', 14'') carrying it are housed in the closed position of the sliding roof in a forward frame transverse member (10) of the sliding roof frame (8) underneath the roof plate (1), characterized in that the elastic strip (20, 20', 20'') possesses a downwardly tapering profile and is fixed, in the vicinity of its thickened upper end, to the rigid bar (14, 14', 14'') that the outer surface of the air guide surface (13, 13', 13'') that is forwards in the direction of travel has a smooth face and that the lower end of the elastic strip (20, 20', 20''), when the sliding roof is closed and this lower end comes against the forward frame transverse member (10) of the sliding roof frame (8), is constructed substantially to be bent over elastically forwards.

2. Wind deflector according to claim 1, characterized in that the lower end of the elastic strip (20, 20', 20'') is bent hooklike and approximately perpendicularly forwards to form a bearing and sealing lip (21) which, when the air guide surface (13, 13', 13'') is raised, comes into contact, in travel-limiting manner, with an abutment surface (22) on the forward roof opening rim (4) and is pressed sealingly against it by the spring force acting upon the air guide surface.

3. Wind deflector according to claim 2, characterized in that the abutment surface (22) is the lower edge face of the roof plate (1), downwardly cranked to form the front roof opening rim (4).

4. Wind deflector according to one of the claims 1 to 3, characterized in that at the lower end of the elastic strip (20, 20', 20''), the outer surface of the bearing and sealing lip (21) adjoins in rounded form the inner surface of the elastic strip.

5. Wind deflector according to one of the claims 1 to 4, characterized in that the elastic strip (20, 20') is formed by cutting to length from profile, which has been extrusion moulded from a rubber-elastic material.

6. Wind deflector according to one of the claims 1 to 5, characterized in that the rigid bar is constructed as a bent sheet metal component (14, 14''), as a glass fibre-reinforced plastics component or as an extruded aluminium component (14').

7. Wind deflector according to one of the claims 1 to 6, characterized in that the elastic strip (20, 20', 20'') is reinforced by an elastically flexible inlay (23).

8. Wind deflector according to claim 7, characterized in that the inlay (23) is formed from thin, perforated spring steel and extends, at the lower end, with a corresponding hook shaped bend into the bearing and sealing lip (21).

9. Wind deflector according to one of the claims 1 to 8, characterized in that the elastic strip (20) is provided, at its thickened upper end, with an undercut seating pocket (24), which is open towards the inner face of the elastic strip with a push-in opening for the rigid bar (14), which engages at least partly formfittingly into the undercut seating pocket (24) for the purpose of fixing the elastic strip.

10. Wind deflector according to one of the claims 1 to 8, characterized in that the elastic strip (20') is provided, at its thickened upper end, with a continuous fixing rib (27), which engages into a seating groove (28) of the rigid bar (14') and is held form-fittingly therein for the purpose of fixing the elastic strip.

11. Wind deflector according to one of the claims 1 to 10, characterized in that the elastic strip (20'), with its front outer surface, adjoins flush the rigid bar (14'), which forms a part of the smooth outer surface of the air guide surface (13').

12. Wind deflector according to claim 11, characterized in that the upper termination of the air guide surface (13') is formed of an additional elastic profile strip (29), which is fixed to the rigid bar (14') opposite the elastic strip (20').

13. Wind deflector according to one of the claims 1 to 8, characterized in that the air guide surface (13'') is formed by injection moulding around the rigid bar (14'') and optionally also the elastically flexible inlay (23) with the rubber-elastic material of the elastic strip (20'').

14. Wind deflector according to one of the claims 1 to 13, characterized in that the rigid bar (14, 14', 14'') projects out from the inner surface of the air guide surface (13, 13', 13'') to increase its bending stiffness with a profiled flange (32, 32', 32'').

## Revendications

1. Déflecteur de vent pour toit coulissant de véhicule automobile, comprenant un volet d'orientation d'air (13, 13', 13'') qui, sous la forme d'une bande (20, 20', 20'') en matériau souple et élastique, présentant un profil qui se rétrécit, en s'étendant transversalement à la direction de marche et qui est fixé A une barre rigide (14, 14', 14'') adaptée à la courbure transversale de la tôle de toit (1) et montée sur le cadre de toit coulissant (8), de manière élastiquement mobile vers le haut en vue de soulever automatiquement, lors de l'ouverture du toit coulissant, le volet d'orientation de l'air sur le bord avant (4) de l'ouverture de toit, la partie active pour l'orientation de l'air, au-dessus de la tôle de toit, étant en position de service, et de l'abaisser dans la position de repos, à l'encontre de la force d'élasticité, lors de la fermeture du toit coulissant, le volet d'orientation de l'air (13, 13', 13'') et la barre (14, 14' 14'') la supportant étant logés, dans la position de fermeture du toit coulissant, sous la tôle de toit (1) au niveau de la traverse de cadre avant (10) du cadre de toit coulissant (8), caractérisé en ce que la bande élastique (20, 20', 20'') présente un profil se rétrécissant vers le bas et est fixée, à proximité de son extrémité supérieure renflée quant au profil, à la barre rigide (14, 14', 14''), en ce que la surface extérieure du volet d'orientation de l'air (13, 13', 13''), disposée à l'avant dans la direction de marche, est une surface de configuration lisse, et en ce que l'extrémité inférieure de la bande élastique (20, 20', 20'') , lors de la fermeture du toit coulissant et lors de l'entrée en contact avec la traverse de cadre avant (10) du cadre de toit coulissant (8), est conçue de façon à pouvoir. fléchir sensiblement vers l'avant, de manière élastique.

2. Déflecteur de vent selon la revendication 1, caractérisé en ce que l'extrémité inférieure de la bande élastique (20, 20', 20'') est courbée à la manière d'un crochet et environ à angle droit vers l'avant pour former une lèvre d'appui et d'étanchéité (21), qui lors du soulèvement du volet d'orientation de l'air (13, 13', 13''), vient s'appliquer, en limitant le déplacement, sur une surface de butée (22) du bord avant (4) de l'ouverture de toit en y étant pressée de manière étanche par la force élastique agissant sur le volet d'orientation de l'air.

3. Déflecteur de vent selon la revendication 2, caractérisé en ce que la surface de butée (22) est constituée par la surface frontale inférieure de la tôle de toit (1) coudée vers le bas pour former le bord avant (4) de l'ouverture de toit.

4. Déflecteur de vent selon l'une des revendications 1 à 3, caractérisé en ce qu'à l'extrémité inférieure de la bande élastique, la surface extérieure de la lèvre d'appui et d'étanchéité (21) se raccorde de manière arrondie à la surface intérieure de la bande élastique.

5. Déflecteur de vent selon l'une des revendications 1 à 4, caractérisé en ce que la bande élastique (20, 20') est fabriquée par découpe d'une longueur appropriée d'un profilé moulé par extrusion en un matériau élastique caoutchouteux.

6. Déflecteur de vent selon l'une des revendications 1 à 5, caractérisé en ce que la barre rigide est réalisée, en tant que pièce de tôle cintrée (14, 14'') selon une pièce de matière plastique renforcée de fibres de verre ou une pièce d'aluminium filée (14').

7. Déflecteur de vent selon l'une des revendications 1 à 6, caractérisé en ce que la bande élastique (20, 20', 20'') est renforcée par un insert (23) flexible de manière élastique.

8. Déflecteur de vent selon la revendication 7, caractérisé en ce que l'insert (23) est réalisé en un acier à ressort mince, perforé, et s'étend à l'extrémité inférieure jusque dans la livre d'appui et d'étanchéité (21) avec une partie cintrée de manière correspondante en forme de crochet.

9. Déflecteur de vent selon l'une des revendications 1 à 8, caractérisé en ce que la bande élastique (20), à son extrémité supérieure renflée, est pourvue d'une cavité de logement (24) en contre-dépouille, qui s'ouvre sur la surface intérieure de la bande élastique par une ouverture d'insertion pour la barre rigide (14) qui, pour la fixation de la bande élastique, s'engage au moins en partie par complémentarité de forme, dans la cavité de logement (24) en contre-dépouille.

10. Déflecteur de vent selon l'une des revendications 1 à 8, caractérisé en ce que la bande élastique (20') est pourvue à son extrémité supérieure renflée, d'une nervure de fixation (27) continue qui, pour la fixation de la bande élastique, s'engage dans une rainure de logement (28) de la barre rigide (14') en y étant retenue par complémentarité de forme.

11. Déflecteur de vent selon l'une des revendications 1 à 10, caractérisé en ce que la bande. élastique (20') se raccorde, avec sa surface extérieure se trouvant à l'avant, à la barre rigide (14') en arrivant au ras de cette dernière, la barre rigide formant une partie de la surface extérieure lisse du volet d'orientation de l'air (13').

12. Déflecteur de vent selon la revendication 11, caractérisé en ce que l'extrémité terminale Supérieure du volet d'orientation de l'air (13') est formé par une bande de profilé élastique (29) supplémentaire, qui est fixée à la barre rigide (14') à l'opposé de la bande élastique (20').

13. Déflecteur de vent selon les revendications 1 à 8, caractérisé en ce que le volet d'orientation de l'air (13'') est réalisé en moulant par injection le matériau élastique caoutchouteux de la bande élastique (20'') par-dessus la barre rigide (14'') et, le cas échéant, l'insert flexible (23).

14. Déflecteur de vent selon l'une des revendications 1 à 13, caractérisé en ce que la barre rigide (14, 14', 14'') fait saillie, avec une aile de profilé (32, 32', 32'') à partir de la surface intérieure du volet d'orientation de l'air (13, 13', 13'') pour augmenter sa rigidité en flexion.
